# EUROPÄISCHE PATENTSCHRIFT

(11) **EP 1 075 033 B1**
(45) Veröffentlichungstag und Bekanntmachung des Hinweises auf die Patenterteilung: **11.09.2002**
(21) Anmeldenummer: 00810567.8
(22) Anmeldetag: 29.06.2000
(51) Int. Cl.: H01M 8/02, H01M 8/04

(54) **Brennstoffzellenbatterie mit einem Stapel von planaren Zellen**
Planar fuel cell stack
Empilement de piles a combustible à structure plane

(30) Priorität: 28.07.1999 EP 99810680
(43) Veröffentlichungstag der Anmeldung: 07.02.2001
(73) Patentinhaber: Sulzer Hexis AG, 8400 Winterthur (CH)
(72) Erfinder: Doggwiler, Bruno, 8215 Hallau (CH); Batawi, Emad Dr., 8400 Winterthur (CH)
(74) Vertreter: Sulzer Management AG

(56) Entgegenhaltungen:
- EP-A- 0 714 147
- US-A- 5 212 023
- US-A- 5 691 075

## Beschreibung

Die Erfindung betrifft eine Brennstoffzellenbatterie mit einem Stapel von planaren Zellen gemäss Oberbegriff von Anspruch 1 sowie eine Verwendung der erfindungsgemässen Batterie.

Aus der EP-A- 0 473 540 (= P.6380) ist eine zentralsysmmetrische Brennstoffzellenbatterie bekannt, deren Interkonnektoren als besondere Temperaturausgleichskörper ausgebildet sind. Diese Ausgleichskörper sind Wärmetauscher, mittels derer Reaktionswärme an zugeführte Luft übertragen wird, bevor diese mit den PEN, den elektrochemisch aktiven Elementen der Brennstoffzellen, in Kontakt gebracht wird (PEN: Positive Elektrode / Feststoff-Elektrolyt / Negative Elektrode). Dieser Wärmetauscher ist ein plattenförmiger Hohlkörper, in dessen Innenraum die Wärmeübertragung auf die Luft stattfindet. Die beiden äusseren Seitenflächen des Interkonnektors weisen Profilierungen auf, mit denen einerseits elektrische Kontakte zu den Elektroden der PEN hergestellt sind und die andererseits für die Reaktionskomponenten (Luft, Brenngas) zwischen den Interkonnektoren und den Elektroden spaltförmige Elektrodenräume frei lassen.

Beim Betreiben der Batterie entstehen in den PEN Temperaturgradienten, die radial gerichtet sind. Diese Gradienten sind relativ klein, so dass Thermospannungen keine Schäden, insbesondere Risse, in den empfindlichen Feststoffelektrolyten der PEN verursachen.

Die als Wärmetauscher ausgebildeten Interkonnektoren sind teuer; ihr Anteil an den Kosten für die Herstellung der Brennstoffzellenbatterie ist beträchtlich. Mit dem Ziel, Kosten zu reduzieren, sind bereits mehrere Vorschläge zur Herstellung von Interkonnektoren gemacht worden. Beispielsweise ist in der EP-A- 0 936 688 (= P.6864) ein als Wärmetauscher ausgebildeter Interkonnektor beschrieben, zu dessen Herstellung ein oder zwei Sinterkörper verwendet werden, wobei die Sinterkörper vorgeformt sind, nämlich durch Pressen eines Pulvergemisches in die Form des Fertigteils und anschliessendes Sintern.

Aufgabe der Erfindung ist es, eine Brennstoffzellenbatterie zu schaffen, deren Herstellungskosten weiter reduziert sind. Diese Aufgabe wird durch die im Anspruch 1 definierte Batterie gelöst.

Die Brennstoffzellenbatterie, die einen Stapel von planaren Zellen enthält, weist folgende Merkmale auf:
a) Elektrochemisch aktive Platten, die PEN, und Interkonnektoren sind in einer alternierenden Abfolge angeordnet.
b) Die PEN und entsprechend die Interkonnektoren weisen jeweils einen ersten Rand und einen zweiten Rand auf, zwischen denen sich eine gerade oder gekrümmte Zone mit weitgehend konstanter Breite erstreckt.
c) Diese Zone ist in Sektoren unterteilbar, durch welche die beiden Ränder verbunden sind.
d) Die Interkonnektoren weisen Profilierungen auf, mittels derer zwei Fluide getrennt durch die Zellen lenkbar sind.
e) In jedem Sektor sind am ersten Rand Eintrittsstellen für das erste Fluid, am zweiten Rand Eintrittsstellen für das zweite Fluid sowie Austrittsstellen für beide Fluide angeordnet.
f) Die Austrittsstellen münden in einen gemeinsamen Kanal.
g) Das zweite Fluid ist als Wärmeträgermedium für während eines Betriebs am PEN freigesetzte Reaktionswärme vorgesehen.
h) Die Interkonnektoren sind erfindungsgemäss einlagig und ihre Profilierung ist jeweils so ausgebildet, dass beide Fluide immer in Kontakt mit dem PEN geführt sind.
i) Am ersten Rand ist ein Wendebereich vorgesehen, mittels dem sich eine Umkehrung der Strömungsrichtung des zweiten Fluids ergibt.
k) Femer ist die Bemessung der Zellen so durchgeführt, dass während des Betriebs schädliche Thermospannungen im PEN nicht überschritten werden.

Der Erfindung liegt eine Erkenntnis zugrunde, die auf folgenden Überlegungen beruht: Wie Modellrechnungen, deren Ergebnisse in der genannten EP-A- 0 473 540 dargestellt sind, gezeigt haben, wird die auf den PEN freigesetzte Reaktionswärme auf die Interkonnektoren hauptsächlich durch Wärmestrahlung übertragen. Der Wärmetransport aufgrund einer Wärmeleitung durch den luftgefüllten Elektrodenraum ist praktisch vernachlässigbar. Die Wand des Interkonnektors hat an jeder Stelle eine Temperatur, die sich nur um wenige Grad Kelvin von der Temperatur an der entsprechenden Stelle des PEN unterscheidet. Diese Wandtemperatur hängt somit nicht wesentlich von der Temperatur der im Hohlraum aufzuwärmenden Luft ab. Der Grund dafür ist ein relativ kleiner Wärmefluss zwischen Wand und Luft.

Dass beim Wärmetransport in den Interkonnektoren solche Verhältnisse bestehen, ist nicht offensichtlich aufgrund der offenbarten Ergebnisse der Modellrechnung. Wird man sich aber dieser Verhältnisse bewusst, so kann man sich die Frage stellen, ob ein als Hohlkörper ausgebildeter Interkonnektor tatsächlich erforderlich ist, um die Reaktionswärme auf die in der EP-A- 0 473 540 beschriebenen Weise abzuführen. Die Antwort, dass es auch anders geht, ist durch die erfindungsgemässe Lösung gegeben. Die Luft (das zweite Fluid) kann bereits bei der Eintrittsstelle mit dem PEN in Kontakt gebracht werden, so dass es möglich ist, den Interkonnektor einlagig - somit kostengünstiger - und nicht als zweilagigen Hohlkörper (zwei Wände, ein Hohlraum) auszubilden. Die zu erwärmende Luft verursacht zwar zusätzliche Temperaturgradienten im PEN. Solche Gradienten, die tangential (azimutal) gerichtet sind, haben eine ähnliche Grössenordnung wie die radialen Temperaturgradienten, die sich beim Betrieb bekannter Zellen ergeben. Somit kann erwartet werden, dass die Thermospannungen bei Verwendung der einlagigen Interkonnektoren nicht wesentlich grössere Werte annehmen. Es lassen sich auch Massnahmen vorsehen, aufgrund derer die zusätzlichen Komponenten der Temperaturgradienten relativ klein gehalten werden können.

Der genannte Stand der Technik bezieht sich auf zentralsymmetrische Brennstoffzellenbatterien. Die erfindungsgemässe Lösung lässt sich jedoch auch auf Batterien mit beispielsweise rechteckigen Zellen anwenden, bei denen das Brenngas (erstes Fluid) auf der einen Seite und die Luft (zweites Fluid) auf der gegenüberliegenden Seite zugeführt wird. Ausserdem gilt, dass das erste Fluid ein beliebig zusammengesetztes Gas mit brennbaren Komponenten sein kann und das zweite Fluid ein Sauerstoff enthaltendes Gas ist, vorausgesetzt, mit diesen Gasen lassen sich am PEN exotherme, elektrischen Strom liefernde Reaktionen durchführen.

Die Interkonnektoren der erfindungsgemässen Brennstoffzellenbatterie ergeben dank ihrer Einlagigkeit weitere Vorteile: a) Die Masse der Batterie ist kleiner als jene der bekannten Batterien. b) Auch die Baugrösse ist reduziert. Daher lässt sich die erfindungsgemässe Batterie gut für einen mobilen Einsatz verwenden, beispielsweise als stromliefemde Komponente in einem Automobil oder für ein Notstromaggregat, das schnell zu einem potentiellen Einsatzort transportierbar sein soll.

Die abhängigen Ansprüche 2 bis 9 beziehen sich auf vorteilhafte Ausführungsformen der Erfindung. Gegenstand des Anspruchs 10 ist eine Verwendung bei mobilen Einsätzen.

Nachfolgend wird die Erfindung anhand der Zeichnungen erläutert. Es zeigen:
- Fig. 1: eine schematische Darstellung der erfindungsgemässen Brennstoffzellenbatterie,
- Fig. 2: einen Querschnitt durch eine Zelle und einen zweiten, benachbarten PEN,
- Fig. 3: Draufsicht auf eine Zone einer üblichen Grundform der Brennstoffzelle,
- Fig. 4: einen Interkonnektor mit einer von der Luftseite her gesehenen Profilierung,
- Fig. 5: die Rückseite des Interkonnektors der Fig. 4,
- Fig. 6: einen Querschnitt durch einen Teil eines Zellenstapels,
- Fig. 7: eine Variante zum Interkonnektor der Fig. 4 und
- Fig. 8: einen Querschnitt durch einen weiteren Interkonnektor.

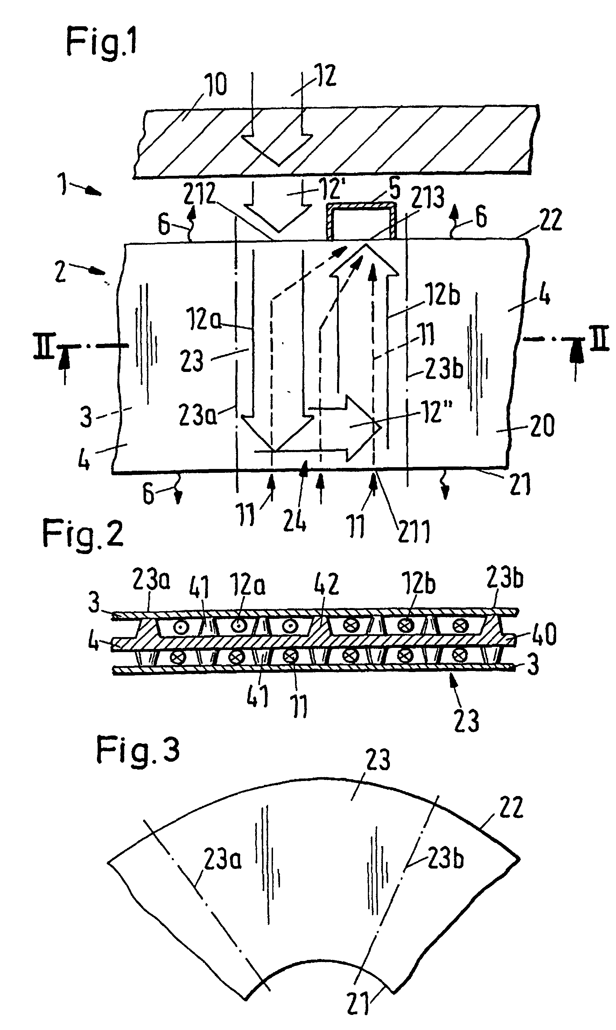

Eine Brennstoffzellenbatterie 1, wie sie in Fig. 1 schematisch dargestellt ist, umfasst einen Stapel 2 von planaren Zellen, die jeweils aus einem PEN 3 und einem Interkonnektor 4 bestehen (als Draufsicht dargestellt). Die PEN 3 und Interkonnektoren 4 sind in einer alternierenden Abfolge angeordnet. Die PEN 3 und entsprechend die Interkonnektoren 4 weisen jeweils einen ersten Rand 21 und einen zweiten Rand 22 auf. Zwischen den Rändern 21 und 22 erstreckt sich eine Zone 20, die in der vorliegenden Darstellung gerade ist, die aber auch gekrümmt sein kann. Die Zone 20 hat eine weitgehend konstante Breite. Sie ist in Sektoren 23 mit Seitenlinien 23a und 23b, welche die beiden Ränder 21 und 22 verbinden, unterteilbar. Die Interkonnektoren 4 weisen Profilierungen auf (vgl. Fig. 2), mittels derer zwei Fluide 11 und 12 getrennt durch die Zellen lenkbar sind. In jedem Sektor sind am ersten Rand Eintrittsstellen 211 für das erste Fluid 11, am zweiten Rand Eintrittsstellen 212 für das zweite Fluid 12 sowie Austrittsstellen 213 für beide Fluide angeordnet. Die Austrittsstellen 213 münden in einen gemeinsamen Kanal 5, der sich längs des Stapels 2 erstreckt und der mit Vorteil als Nachverbrennungsraum verwendet wird, nämlich zum Verbrennen der im ersten Fluid 11 noch vorhandenen reaktionsfähigen Komponenten. Das zweite Fluid 12 ist als Wärmeträgermedium für die auf den PEN 3 freigesetzte Reaktionswärme vorgesehen.

Erfindungsgemäss sind die Interkonnektoren 4 einlagig. Ihre Profilierung ist jeweils so ausgebildet, dass beide Fluide 11 bzw. 12 immer in Kontakt mit dem PEN 3 geführt sind. Am ersten Rand 211 ist ein Wendebereich 24 vorgesehen, mittels dem sich eine Umkehrung der Strömungsrichtung des zweiten Fluids 12 ergibt. Die Batterie 1 ist so bemessen, dass im PEN 3 während des Betriebs schädliche Thermospannungen nicht überschritten werden. Die Bemessung bezieht sich auf die Dicke des Interkonnektors 4, seine Profilierung und seine Breite (= Breite der Zone 20). Es spielt bei der Bemessung auch die Luftzahl (= Faktor, der den stöchiometrischen Luftüberschuss angibt) eine Rolle, und ebenso die Wärmemenge, die als Strahlung 6 vom Zellenstapel 2 an die Umgebung abgegeben wird.

Die Umgebung umfasst eine Hülle 10 beim oder um den Zellenstapel 2, die durchlässig strukuriert ist, so dass durch das zweite Fluid 12 bei einem Einströmen zum Zellenstapel 2 abgestrahlte Wärme 6 aufgenommen werden kann. Mit Vorteil wird ein grosser Teil der bei den PEN-Reaktionen anfallenden Abwärme durch Abstrahlung 6 aus dem Zellenstapel 2 abgeführt - mindestens rund ein Drittel. So kann das zweite Fluid 12 relativ heiss in den Zellenstapel 2 eintreten, so dass die in den PEN 3 durch direkten Kontakt mit dem Fluid 12 verursachten zusätzlichen Thermospannungen relativ klein sind. Vorteilhaft ist auch, wenn auf der Seite des ersten Rands 21 ein Reformer angeordnet ist, in dem ein Brennstoff mittels endothermer Reaktionen in ein für die PEN-Reaktionen geeignete Form umgewandelt wird. Die Strahlung 6 kann so als Wärmequelle der endothermen Reaktionen genutzt werden.

Die einlagigen Interkonnektoren 4 sind mit Vorteil vorgeformte Sinterteile; oder sie sind aus solchen hergestellt. Da das für die Herstellung zu verwendende Material Chrom enthält, müssen die Sinterteile noch mit geeigneten Schutzschichten versehen sein.

Der in Fig. 2 gezeigte Interkonnektor 4 hat Profilierungen, die Reliefstrukturen auf einer Trennwand 40 bilden. Diese Profilierungen umfassen noppenartige Erhebungen 41 und kammartige Erhebungen 42. Die Erhebungen 41 und 42 stellen einerseits elektrische Kontakte zu den PEN 3 her. Andererseits dienen die kammartigen Erhebungen 42 zur Leitung der Fluide 11 und 12, insbesondere auf der Seite des zweiten Fluids 12, das als Strömung 12a vom Rand 22 - siehe Fig. 1 - zum Wendebereich 24 (Pfeil 12") gerichtet ist und als Strömung 12b umgekehrt gerichtet ist.

Mit Vorteil ist die Brennstoffzellenbatterie 1 zentralsymmetrisch ausgebildet. In Fig. 3 ist ein entsprechender Ausschnitt der Zone 20 mit einem Sektor 23 abgebildet. Der Rand 21 liegt bei dieser Geometrie auf der Oberfläche eines zentralen Kanals, über den das erste Fluid 11 in den Zellenstapel 2 zuführbar ist. In diesem Kanal wird mit Vorteil ein langgestreckter, zylindrischer Reformer angeordnet.

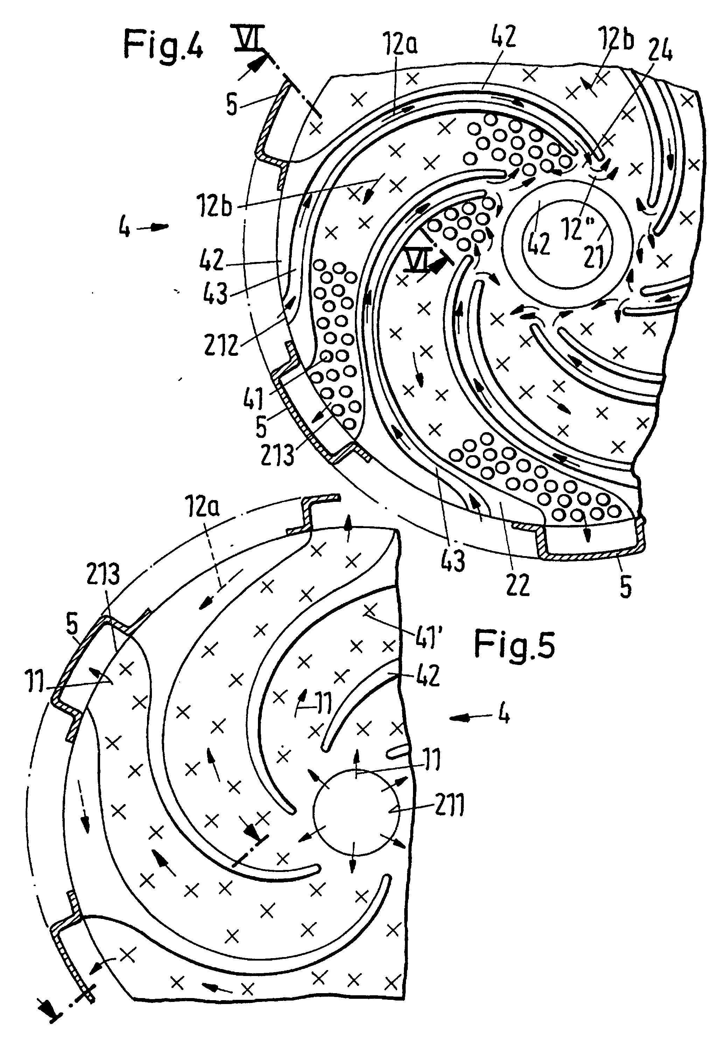

Fig. 4 zeigt einen Interkonnektor 4 mit einer von der Luftseite her gesehenen Profilierung. Mit Pfeilen ist die Strömung der Luft, d. h. des zweiten Fluids 12, angegeben. Kammartige Erhebungen 42 haben eine Spiralform. (Ein Sektor 23 gemäss Fig. 1 oder 4 - nicht eingezeichnet - hat eine entsprechende Spiralform. Es liegen sechs Sektoren vor.) Das zweite Fluid 12 (Pfeil 12') wird von der Eintrittsstelle 212 durch einen Kanal 43, der durch die kammartigen Erhebungen 42 gebildet ist, zum Wendebereich 24 geführt (Pfeil 12a). Dort wird die Strömungsrichtung des zweiten Fluids 12 umgelenkt (Pfeil 12"), so dass das Fluid 12 in umgekehrter Richtung zum Rand 22 zurückfliesst (Pfeil 12b). In den Bereichen zwischen den Kanälen 43, in denen das Fluid 12 zurückfliesst, besteht die Profilierung aus noppenartigen Erhebungen 42, die teilweise schematisch als Feld mit Kreuzen 41' dargestellt ist. Bei der Austrittsstelle 213 gelangt das Fluid 12 in den kanalförmigen Nachverbrennungsraum 5.

Statt spiralförmig können die Kanäle 43 auch geradlinig sein und zwar radial zum Zentrum des Interkonnektors 4 gerichtet. Statt sechs Sektoren 23 kann die Profilierung des Interkonnektors 4 auch weniger oder mehr Sektoren 23, mit Vorteil eine Anzahl zwischen vier und zehn, aufweisen.

Fig. 5 zeigt die Rückseite des einlagigen Interkonnektors 4 der Fig. 4. Auf dieser Seite wird das erste Fluid 11 von einem zentralen Kanal (innerhalb des Rands 211) zwischen noppenartigen Erhebungen 41' und mittels kammartigen Erhebungen 42 zu den Austrittstellen 213 am äusseren Rand 212 geleitet.

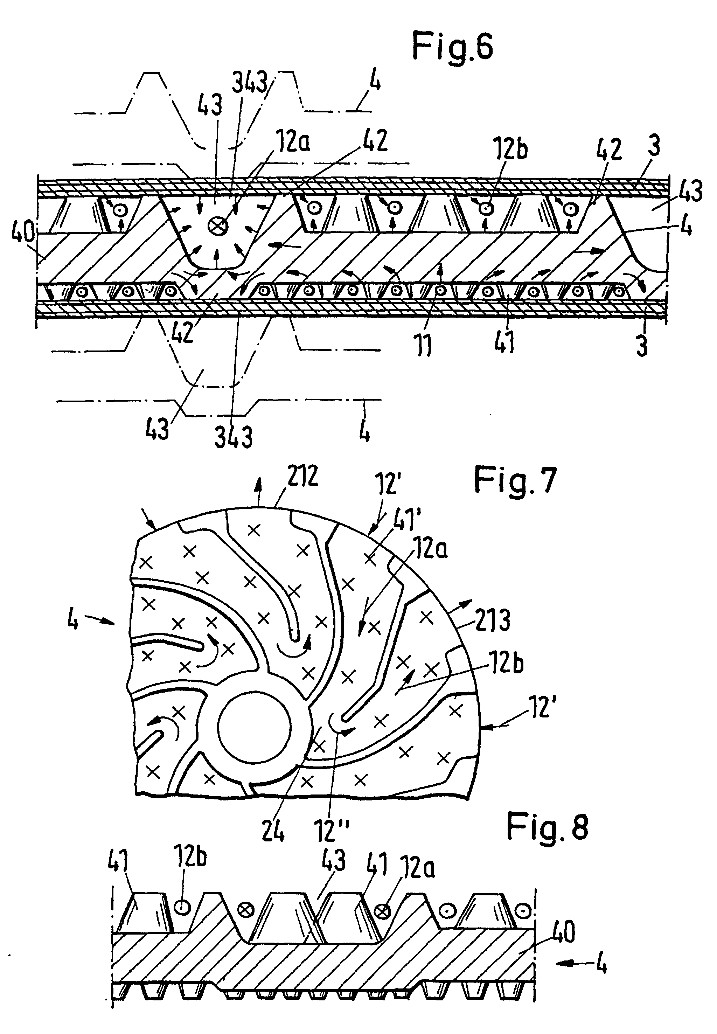

Fig. 6 zeigt einen Querschnitt durch den Interkonnektor 4 der Figuren 4 und 5 nach der Linie VI - VI in Fig. 4. Durch Pfeile, die in der Bildebene liegen, ist der Wärmetransport in der Zelle 3, 4 angedeutet. Der Querschnitt des Kanals 43 weist in Richtung senkrecht zum PEN 3 eine Tiefe auf, die verglichen mit den entsprechenden Tiefen der übrigen Profilierung grösser ist. Dank dem relativ grossen Kanalquerschnitt bildet sich eine Strömung des Fluids 12 (Pfeil 12a) aus, die einen minimalen Wärmeentzug aus einem überströmten Bereich 343 des PEN 4 zur Folge hat. In der Mitte dieses Bereichs 343 finden praktisch keine stromliefemden Reaktionen statt. Über die kammartige Erhebung 42 auf der Seite des Fluids 11 wird Wärme aus dem Interkonnektor 4 dem Bereich 343 zugeführt.

Die Luftseite des Interkonnektors 4 kann so ausgebildet sein, dass - siehe Fig. 6 - das zweite Fluid 12 (Pfeile 12', 12a) bereits beim Zuführen durch eine Profilierung mit noppenartigen Erhebungen 41' geleitet wird. In diesem Zuführbereich finden ebenfalls stromliefernde Reaktionen statt.

Bei einem weiteren Ausführungsbeispiel mit einem Interkonnektor 4 gemäss Fig. 8 besteht für den Zuführkanal 43 eine Kombination der Merkmale, die aus den beiden Ausführungsformen gemäss den Figuren 6 und 7 gegeben sind. Dank noppenartigen Erhebungen 41 im Kanal 43 finden auch dort die stromliefernden PEN-Reaktionen - wenn auch in einem etwas reduzierteren Ausmass - statt.

## Patentansprüche

1. Brennstoffzellenbatterie (1) mit einem Stapel (2) von planaren Zellen (3, 4), wobei
a) elektrochemisch aktive Platten (3) - sogenannte PEN - und Interkonnektoren (4) in einer alternierenden Abfolge angeordnet sind,
b) die PEN und entsprechend die Interkonnektoren jeweils einen ersten Rand (21) und einen zweiten Rand (22) aufweisen, zwischen denen eine gerade oder gekrümmte Zone (20) mit weitgehend konstanter Breite sich erstreckt,
c) diese Zone in Sektoren (23) unterteilbar ist, durch welche die beiden Ränder verbunden sind,
d) die Interkonnektoren Profilierungen (41, 42) aufweisen, mittels derer zwei Fluide (11, 12) getrennt durch die Zellen lenkbar sind,
e) in jedem Sektor am ersten Rand Eintrittsstellen (211) für das erste Fluid (11), am zweiten Rand Eintrittsstellen (212) für das zweite Fluid (12) sowie Austrittsstellen (213) für beide Fluide angeordnet sind,
f) die Austrittsstellen in einen für den ganzen Zellenstapel (2) gemeinsamen Kanal (5) münden und
g) das zweite Fluid als Wärmeträgermedium für während eines Betriebs am PEN freigesetzte Reaktionswärme vorgesehen ist,
**dadurch gekennzeichnet, dass** die Interkonnektoren (4) einlagig sind und ihre Profilierung jeweils so ausgebildet ist, dass beide Fluide immer in Kontakt mit dem PEN geführt sind, dass am ersten Rand ein Wendebereich (24) vorgesehen ist, mittels dem sich eine Umkehrung der Strömungsrichtung des zweiten Fluids ergibt und dass die Bemessung der Zellen so durchgeführt ist, dass während des Betriebs schädliche Thermospannungen im PEN nicht überschritten werden.

2. Brennstoffzellenbatterie nach Anspruch 1, **dadurch gekennzeichnet, dass** die einzelnen Interkonnektoren (4) vorgeformte Sinterteile sind oder aus solchen hergestellt sind.

3. Brennstoffzellenbatterie nach Anspruch 1 oder 2, **dadurch gekennzeichnet, dass** die Profilierungen der Interkonnektoren (4) noppenartige Erhebungen (41) aufweisen, die elektrische Kontakte zu den PEN (3) herstellen.

4. Brennstoffzellenbatterie nach einem der Ansprüche 1 bis 3, **dadurch gekennzeichnet, dass** die Profilierung der Interkonnektoren (4) zur Leitung der Fluide (11, 12), insbesondere auf der Seite des zweiten Fluids (12), kammartige Erhebungen (42) aufweisen und dass diese Erhebungen elektrische Kontakte zu den PEN (3) herstellen.

5. Brennstoffzellenbatterie nach Anspruch 4, **dadurch gekennzeichnet, dass** zumindest ein Teil der kammartigen Erhebungen (42) eine Spiralform haben oder geradlinig sowie radial ausgerichtet sind.

6. Brennstoffzellenbatterie nach einem der Ansprüche 1 bis 5, **dadurch gekennzeichnet, dass** in jedem Sektor (23) für das zweite Fluid (12) ein zum Wendebereich (24) führender Kanal (43) vorgesehen ist, dessen Querschnitt in Richtung senkrecht zum PEN (3) eine Tiefe aufweist, die verglichen mit den entsprechenden Tiefen der übrigen Profilierung grösser ist.

7. Brennstoffzellenbatterie nach einem der Ansprüche 1 bis 6, **dadurch gekennzeichnet, dass** die Zellen so bemessen sind, dass beim Betrieb der Batterie (1) mindestens ein Drittel der bei den PEN-Reaktionen anfallenden Abwärme durch Abstrahlung (6) aus dem Zellenstapel (2) abgeführt wird.

8. Brennstoffzellenbatterie nach einem der Ansprüche 1 bis 7, **dadurch gekennzeichnet, dass** die Zellen zumindest angenähert zentralsymmetrisch ausgebildet sind, das erste Fluid (11) über einen zentralen, in Achsrichtung verlaufenden Kanal zuführbar ist, vorzugsweise in diesem Kanal ein Reformer zur Aufbereitung des ersten Fluids (11) angeordnet ist, der gemeinsame Kanal bei den Austrittsstellen als Nachverbrennungsraum vorgesehen ist und eine Hülle (2) um den Zellenstapel (2) durchlässig strukuriert ist, so dass durch das zweite Fluid (12) - bei einem Einströmen zu den Zellen - abgestrahlte Reaktionswärme (6) aufnehmbar ist.

9. Brennstoffzellenbatterie nach Anspruch 8, **dadurch gekennzeichnet, dass** die Sektoren (23) gleich gross sind und ihre Anzahl zwischen vier und zehn liegt.

10. Verwendung einer Brennstoffzellenbatterie gemäss einem der Ansprüche 1 bis 9 für einen mobilen Einsatz, beispielsweise als stromliefernde Komponente in einem Automobil oder in einem Notstromaggregat.

## Claims

1. Fuel cell battery (1) comprising a stack (2) of planar cells (3, 4), with
a) electrochemically active plates (3) ― so-called PENs ― and interconnectors (4) being arranged in an alternating sequence,
b) the PENS and accordingly the interconnectors having in each case a first edge (21) and a second edge (22), between which a straight or curved zone (20) with a largely constant width extends,
c) this zone being subdividable into sectors (23) through which the two edges are connected,
d) the interconnectors having profilings (41, 42) by means of which two fluids (11, 12) can be separately conducted through the cells,
e) in each sector there being provided entry points (211) for the first fluid (11) at the first edge, entry points (212) for the second fluid (12) at the second edge as well as outlet points (213) for both fluids,
f) the outlet points opening into a common passage (5) for the entire cell stack (2) and
g) the second fluid being provided as a heat carrier medium for reaction heat which is liberated at the PEN during an operation, **characterized in that** the interconnectors (4) are single layered and their profiling is in each case executed in such a manner that both fluids are always conducted in contact with the PEN; **in that** a turning region (24) is provided at the first edge by means of which a reversal of the flow direction of the second fluid results; and **in that** the dimensioning of the cells is executed in such a manner that harmful thermal stresses in the PEN are not exceeded during the operation.

2. Fuel cell battery in accordance with claim 1, **characterized in that** the individual interconnectors (4) are pre-shaped sintered parts or are manufactured of such.

3. Fuel cell battery in accordance with claim 1 or claim 2, **characterized in that** the profilings of the interconnectors (4) have knob-like elevations (41) which produce electrical contacts to the PENs (3).

4. Fuel cell battery in accordance with any one of the claims 1 to 3, **characterized in that** the profiling of the interconnectors (4) for conducting the fluids (11, 12) have comb-like elevations (42), in particular on the side of the second fluid (12); and **in that** these elevations produce electrical contacts to the PENs (3).

5. Fuel cell battery in accordance with claim 4, **characterized in that** at least a portion of the comb-like elevations (42) have a spiral shape or are directed in a straight line as well as radially.

6. Fuel cell battery in accordance with any one of the claims 1 to 5, **characterized in that** in each sector (23) a passage (43) which leads to the turning region (24) is provided for the second fluid (12), the cross-section of which has a depth in the direction perpendicular to the PEN (3) which is greater in comparison to the corresponding depths of the remaining profiling.

7. Fuel cell battery in accordance with any one of the claims 1 to 6, **characterized in that** the cells are dimensioned in such a manner that during the operation of the battery (1) at least one third of the waste heat which arises in the PEN reactions is led off out of the cell stack (2) through radiation (6).

8. Fuel cell battery in accordance with any one of the claims 1 to 7, **characterized in that** the cells are designed to be at least approximately centrally symmetrical, the first fluid (11) can be fed in via a central passage which extends in the axial direction, preferably that a reformer for the processing of the first fluid (11) is arranged in this passage, the common passage is provided as an afterburner chamber at the outlet points and a sleeve (2) around the cell stack (2) is permeably structured so that radiated off reaction heat (6) can be taken up by the second fluid (12) during inflow to the cells.

9. Fuel cell battery in accordance with claim 8, **characterized in that** the sectors (23) are of equal size and their number lies between four and ten.

10. Use of a fuel cell battery in accordance with any one of the claims 1 to 9 for a mobile application, for example as current supplying components in an automobile or in an emergency power aggregate.

## Revendications

1. Batterie de cellules électrochimiques (1) avec une pile (2) de cellules planes (3, 4) où
a) des plaques électrochimiquement actives (3) - des soi-disant PEN - et des interconnecteurs (4) sont disposés selon une suite alternante,
b) les PEN et d'une manière correspondante les interconnecteurs présentent respectivement un premier bord (21) et un deuxième bord (22) entre lesquels s'étend une zone rectiligne ou courbée (20) d'une largeur sensiblement constante,
c) cette zone est divisible en des secteurs (23) par lesquels les deux bords sont reliés,
d) les interconnecteurs présentent des profilages (41, 42) au moyen desquels deux fluides (11, 12) peuvent être guidés séparément à travers les cellules,
e) dans chaque secteur sont disposés au premier bord des emplacements d'entrée (211) pour le premier fluide (11), au deuxième bord des emplacements d'entrée (212) pour le second fluide (12) ainsi que des emplacements de sortie (213) pour les deux fluides,
f) les emplacements de sortie débouchent dans un canal (5) commun à toute la pile de cellules (2) et
g) le second fluide est prévu comme milieu caloporteur pour la chaleur de réaction libérée pendant un fonctionnement au PEN,
**caractérisée en ce que** les interconnecteurs (4) sont en une couche et leur profilage est respectivement réalisé de façon que les deux fluides soient toujours guidés en contact avec les PEN, **en ce qu'**il est prévu au premier bord une zone de retournement (24) au moyen de laquelle se produit une inversion de la direction d'écoulement du second fluide, et **en ce que** la dimension des cellules est prévue de façon que pendant le fonctionnement, des tensions thermoélectriques nocives dans le PEN ne soient pas dépassées.

2. Batterie de cellules électrochimïques selon la revendication 1, **caractérisée en ce que** les interconnecteurs individuels (4) sont des pièces frittées formées préalablement ou sont réalisées à partir de telles pièces.

3. Batterie de cellules électrochimiques selon la revendication 1 ou 2, **caractérisée en ce que** les profilages des interconnecteurs (4) présentent des surélévations (41) en forme de téton qui établissent des contacts électriques aux PEN (3).

4. Batterie de cellules électrochimiques selon l'une des revendications 1 à 3, **caractérisée en ce que** le profilage des interconnecteurs (4) pour le guidage des fluides (11, 12), notamment au côté du second fluide (12), présente des surélévations (42) en forme de peigne et **en ce que** ces surélévations établissent des contacts électriques aux PEN (3).

5. Batterie de cellules électrochimiques selon la revendication 4, **caractérisée en ce qu'**au moins une partie des surélévations (42) en forme de peigne ont une forme en spirale et sont orientées d'une manière rectiligne ainsi que radiale.

6. Batterie de cellules électrochimiques selon l'une des revendication 1 à 5, **caractérisée en ce qu'**il est prévu dans chaque secteur (23) pour le second fluide (12) un canal (43) menant à la zone de retournement (24), dont la section transversale présente en direction perpendiculairement aux PEN (3) une profondeur qui, en comparaison aux profondeurs correspondantes du profilage restant, est plus grande.

7. Batterie de cellules électrochimiques selon l'une des revendications 1 à 6, **caractérisée en ce que** les cellules sont dimensionnées de façon que lors du fonctionnement de la batterie (1), au moins un tiers de la chaleur perdue produite lors des réactions des PEN est évacuée par rayonnement (6) de la pile de cellules (2).

8. Batterie de cellules électrochimiques selon l'une des revendications 1 à 7, **caractérisée en ce que** les cellules sont réalisées au moins approximativement selon une symétrie centrale, **en ce que** le premier fluide (11) peut être amené par un canal central s'étendant dans la direction d'axe, qu'il est disposé de préférence dans ce canal un reformeur pour la préparation du premier fluide (11), le canal commun est prévu aux emplacements de sortie comme enceinte de combustion postérieure, et une gaine (2) autour de la pile de cellules (2) est structurée de façon à être perméable de telle sorte que la chaleur de réaction (6) rayonnée par le deuxième fluide (12), lors d'un afflux vers les cellules, peut être absorbée.

9. Batterie de cellules électrochimiques selon la revendication 8, **caractérisée en ce que** les secteurs (23) sont de la même grandeur et que leur nombre est compris entre quatre et dix.

10. Utilisation d'une batterie de cellules électrochimiques selon l'une des revendications 1 à 9 pour une mise en ouvre mobile, par exemple comme composant fournissant du courant dans une automobile ou dans un groupe électrogène de secours.
